Europäisches Patentamt

European Patent Office

Office européen des brevets

(11) Veröffentlichungsnummer: **0 195 343**
**A1**

(12) # EUROPÄISCHE PATENTANMELDUNG

(21) Anmeldenummer: 86103175.5

(22) Anmeldetag: 10.03.86

(51) Int. Cl.⁴: **B60H 1/24** , F24F 13/065

(30) Priorität: 21.03.85 DE 3510278

(43) Veröffentlichungstag der Anmeldung:
24.09.86 Patentblatt 86/39

(84) Benannte Vertragsstaaten:
AT BE DE FR GB IT NL SE

(71) Anmelder: **Siemens Aktiengesellschaft Berlin und München**
**Wittelsbacherplatz 2**
**D-8000 München 2(DE)**

(72) Erfinder: **Hildebrand, Reinhard**
**Hauptstrasse 11**
**D-8627 Redwitz(DE)**
Erfinder: **Kusuma, Djuanarto-Adi**
**Am Sportplatz 20**
**D-8635 Dörfles Esbach(DE)**

(54) **Belüftungsvorrichtung in Kraftfahrzeugen.**

(57) Belüftungsvorrichtung aus Kunststoff in Kraftfahrzeugen, insbesondere am Armaturenbrett mit einem in ein Gehäuse - (3) eingerasteten Lüftungsgitter (1), das einen Kugelpfanne-naufnahmeteller (2) aufweist, der von der am Gehäuse (3) angebrachten Kugel (4) aufgenommen wird. Das Gehäuse - (3) kann in eine Blende (5) mit Rippen (7), das schräge Schenkel (6) aufweisen kann, angeordnet sein.

FIG 3

EP 0 195 343 A1

Belüftungsvorrichtung in Kraftfahrzeugen

Die Erfindung betrifft eine Belüftungsvorrichtung in Kraftfahrzeugen, enthaltend eine Gehäuse und mindestens ein Lüftungsgitter aus Kunststoff. Derartige Vorrichtungen befinden sich überwiegend am Armaturenbrett von Kraftfahrzeugen.

Bekannte, aus Kunststoff bestehende Belüftungsvorrichtungen in Kraftfahrzeugen, bestehen aus einem Gehäuse und einem Lüftungsgitter, an dem mehrere Lamellen eingerastet sind, um die Luftströmungsrichtung zu verändern. Die einzelnen Lamellen werden mit einer Verbindungsstange miteinander verbunden. Dies hat den Nachteil, daß die Montage-und Werkzeugkosten sehr hoch sind. Das Lüftungsgitter ist an das Gehäuse in einer Richtung drehbar gelagert. Ferner ist von Nachteil, daß bei Schwenken des Gitters dieses nicht immer innerhalb des Gehäuses bleibt.

Der Erfindung liegt die Aufgabe zugrunde, die Anzahl der Einzelteile der Belüftungsvorrichtung zu reduzieren unter Beibehaltung der vollen Funktion der Vorrichtung. Gleichzeitig sollen auch die Fertigungs-und Montagekosten reduziert werden. Außerdem soll insbesondere im Hinblick auf die zunehmenden Sicherheitsanforderungen im Fahrzeugbau das Lüftungsgitter im geschwenkten Zustand nicht aus dem Gehäuse herausragen.

Die Aufgabe wird bei einer Vorrichtung der eingangs genannten Art erfindungsgemäß mit einem in ein Gehäuse eingerasteten Lüftungsgitter gelöst, das einen Kugelpfannenaufnahmeteller aufweist, der von der am Gehäuse angebrachten Kugel aufgenommen wird. Es kann noch eine Blende mit feststehenden Rippen vorhanden sein, die in die Armaturentafel integriert ist. Durch die Kugellagerung ist das Lüftungsgitter in alle Richtungen verstellbar und damit auch die Luftströmungsrichtung beeinflußbar. Die bei bisherigen Ausführungen erforderlichen Lamellen und die dazugehörige Verbindungsstange werden nicht mehr benötigt. Somit entfallen die Montage-und Werkzeugkosten für diese Teile.

Gemäß einer bevorzugten Ausführungsform ist das Gehäuse mit dem Lüftungsgitter in eine mit schrägen Schenkeln versehene Blende mit feststehenden Rippen eingebaut, die in die Armaturentafel integriert ist. Durch die Schrägstellung der Schenkel der Blende wird vorallem der Luftströmungswinkel vergrößert.

Geeignete Kunststoffe sind Thermoplaste, z.B. Acrylnitril-Butadien-Styrol-Copolymere (ABS), Polyphenylenoxide (PPO), insbesondere Acrylnitril-Butadien-Styrol-Polycarbonat-Blend.

Die Erfindung wird anhand der Zeichnung näher erläutert.

FIG 1 zeigt eine Ausführung gemäß der Erfindung mit einem Schnitt durch die Kugellagerung und das Lüftungsgitter 1. In den mit 2 bezeichneten Kugelpfannenteller ist die Kugel 4 in allen Richtungen drehbar gelagert, an dem Gehäuse 3 angebracht.

FIG 2 zeigt einen Schnitt einer Ausführung nach FIG 1, wobei auf dem Gehäuse 3 eine Blende 5 angebracht ist.

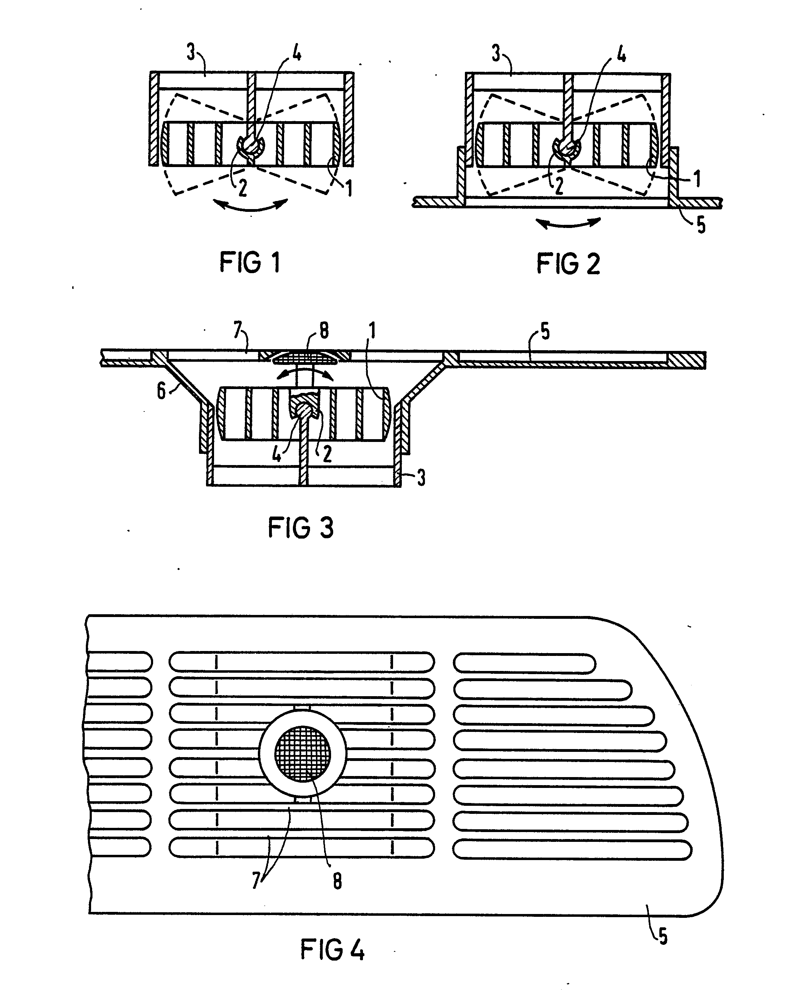

Gemäß einer Ausführung nach FIG 3 sind die Schenkel 6 in der Blende 5, die in die Armaturentafel integriert ist, - schräg. Die Kugel 4 ist in dem Kugelpfannenteller 2 angeordnet. Mit 8 ist ein Betätigungsknopf bezeichnet.

FIG 4 zeigt die Vorderansicht der Blende 5 mit feststehenden Rippen 7. 8 ist wiederum der Betätigungsknopf.

## Ansprüche

1. Belüftungsvorrichtung in Kraftfahrzeugen, enthaltend ein Gehäuse und mindestens ein Lüftungsgitter aus Kunststoff, **dadurch gekennzeichnet,** daß ein in ein Gehäuse (3) eingerastetes Lüftungsgitter (1) einen Kugelpfannenaufnahmeteller (2) aufweist, der von der am Gehäuse (3) angebrachten Kugel (4) aufgenommen wird.

2. Belüftungsvorrichtung in Kraftfahrzeugen, **gekennzeichnet** durch eine Blende (5), die feststehende Rippen (7) aufweist, und in die Armaturentafel integriert ist.

3. Belüftungsvorrichtung in Kraftfahrzeugen nach Anspruch 2, **dadurch gekennzeichnet,** daß die Blende (5) schräge Schenkel (6) aufweist.

0 195 343

FIG 1

FIG 2

FIG 3

FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-1 432 145 (BARBER) <br> * Insgesamt * | 1 | B 60 H 1/24 <br> F 24 F 13/065 |
| A | DE-U-6 944 066 (HAPPICH) <br> * Insgesamt * | 1 | |
| A | GB-A- 351 050 (STONE) | | |
| A | GB-A-1 310 493 (SMITH) | | |
| A | GB-A-1 396 993 (CLEAR HOOTERS) | | |

**RECHERCHIERTE SACHGEBIETE (Int. Cl.4)**

B 60 H
F 24 F

Der vorliegende Recherchenbericht wurde für alle Patentansprüche erstellt.

| Recherchenort <br> DEN HAAG | Abschlußdatum der Recherche <br> 24-04-1986 | Prüfer <br> PIRIOU J.C. |
|---|---|---|